# EUROPEAN PATENT SPECIFICATION

(11) **EP 1 873 005 B1**
(45) Date of publication and mention of the grant of the patent: **03.06.2009**
(21) Application number: 05740633.2
(22) Date of filing: 20.04.2005
(51) Int. Cl.: B60N 2/22, B60N 2/36

(54) **LOCKING MECHANISM FOR THE BACKREST OF A VEHICLE REAR SEAT**
VERRIEGELUNGSMECHNISMUS FÜR DIE RÜCKENLEHNE EINES RÜCKSITZES EINES FAHRZEUGS
MECANISME DE BLOCAGE POUR DOSSIER DE SIEGE ARRIERE D'UN VEHICULE

(43) Date of publication of application: 02.01.2008
(73) Proprietor: Cie Automotive, S.A., 48011 Bilbao (ES)
(72) Inventor: ALMEIDA AZENHA, Joao Jose, FIGUEIRA DA FOZ (PT); PINTO DA SILVA MACHADO, Bruno Cesar, FIGUEIRA DA FOZ (PT)
(74) Representative: Carpintero Lopez, Francisco
(86) International application number: PCT/ES2005/000206
(87) International publication number: WO 2006/111587

(56) References cited:
- FR-A1- 2 778 876
- FR-A1- 2 780 353
- US-A- 5 593 244
- US-B1- 6 733 078

## Description

### OBJECT OF THE INVENTION

The present invention relates to a locking mechanism which permits having the rear seat of a vehicle in different operating positions, as well as its release to occupy a folding position which permits increasing the space of the compartment designed to transport luggage, (see, for example, FR-A-2 778 876, corresponding to the preamble of claim 1).

An object of the invention is that the locking mechanism shows great mechanical simplicity, reduced weight and a low manufacturing cost.

### BACKGROUND OF THE INVENTION

A large quantity of vehicles includes the possibility that rear seat backs can be folded forward in order to increase the size of the compartment designed to transport luggage. There are several patents related to locking mechanisms which secure or release the position of the back, highlighting the following documents below:

Patent of invention ES 8 608 417 relates to an actuating mechanism for a locking device in a rear seat back lock which has in the upper edge of the back an actuating button coupled by means of an actuating rod with the locking device. The locking rod is pretensioned by a spring towards the actuating button and has a deviation lever at its other end ending in a fork, whereby on rotating the deviation lever in anti-clockwise direction a lock bolt is extracted, so that the seat back lock is unlocked. In this situation the seat back can be folded forward.

Patent of invention US 4 779 921 also discloses the incorporation of an actuating button connected to a rod which comprises the means of pushing which causes the release of the locking mechanism of the rear seat back of a vehicle. A locking lever is associated to the rod, equipped with means of anchoring which catches in a tongue solidly joined to the chassis.

On the other hand, patent of invention ES 2 124 133 discloses a seat back fixing mechanism which has the object of avoiding the noise that the release button of the mechanism may generate within its housing, incorporating for said purpose protuberances in the button in collaboration with grooves defined in the walls of its housing wherein said protuberances slide. In this way, noises are avoided whilst the resistance of the button's movement is not increased. In this same document it can be observed that the button pushes the rod which acts on the back's locking mechanism.

The mechanisms disclosed are largely made of metal material and have a certain constructive and assembly complexity.

Furthermore, undesired noises and stresses are generally produced.

### DESCRIPTION OF THE INVENTION

The locking mechanism of the invention, which is defined in claim 1, is housed inside the seat back and is formed from a reduced number of parts formed from plastic material, which simplifies the manufacturing and assembly of the product, reduces its weight, eliminate the unnecessary noises and its cost is reduced.

This locking mechanism interlocks in a metal slide provided in the vehicle chassis.

In particular, the locking mechanism is fundamentally formed from a body which is embedded in the seat back and has a cavity central which can house the anchoring slide, mounting the other locking devices on said body and, in particular, a rocker arm required for the corresponding spring and which may tilt due to the action of the slide, as well as a bolt which can be moved by the movement of the rocker arm in a direction transverse to the movement of the slide, it being possible to be interlocked in one of the slide orifices which determine the different operating positions of the back.

The rocker arm is mounted in the body via a shaft which permits its tilting in opposite directions, said rocker arm having a pin at one of its ends which grips the locking bolt and which, by action of the spring, tends to move it inside the cavity of the locking mechanism body, it being possible to be thus fitted in one of the slide orifices, when it is in the corresponding position.

At the end opposite the bolt, the rocker arm has a flexible flange against which the slide may abut in its introduction in the cavity central of the locking mechanism, the flexible flange having a rear pin which can be interlocked or unlocked with respect to a retaining rib provided in the body of the locking mechanism, so that when said rear pin and the retaining rib are coupled, the rocker arm tilts against the action of the spring, maintaining the locking bolt retained with respect to the locking body cavity.

This bolt is mounted, in sliding fashion, on transverse guides provided in the body so that the tilting of the rocker arm in one direction or another determines the movement of the bolt in transverse direction for its interlocking or unlocking of the corresponding slide orifice.

The locking mechanism is complemented with a manually actuated button which is linked to the rocker arm, so that on manually actuating the button the rocker arm folds, against the action of the spring, causing the extraction of the bolt with respect to the corresponding slide orifice. The actuation of the button therefore permits the unlocking of the back, for its folding towards the seat, or change in position of the back.

It should also be highlighted that the bolt has a conical configuration in the portion which penetrates the slide orifices, so that the push of the rocker arm, under the force exerted by the spring, causes the pushing of the bolt on the slide which guarantees a good fit between both, avoiding grating or clattering from occurring as a consequence of the vibrations caused during the vehicle operation.

To totally disconnect the back from the inclined positions and completely fold it towards the seat, the manually actuated button will be pressed which, via the corresponding rod acts on the rocker arm, causing its tilting which also causes the extraction of the bolt with respect to the slide orifice wherein it is housed. This folding causes the elastic flange to tilt, entering the cavity of the body of the locking mechanism, suffering an elastic deformation due to pushing against the slide which is housed in said cavity.

Keeping the button actuated, the folding of the back towards the seat commences, so that the locking mechanism is disconnected with respect to the slide. From this time on, it is possible to continue the folding without needing to keep the button actuated. On releasing the button, the rocker arm tends, by action of the spring, to recover its previous position, but the rear pin of the flexible flange is encased against the retaining rib of the body, preventing the tilting of the rocker arm.

In this position, the elastic flange is disposed inside the cavity of the locking mechanism body, in the path of the slide, whilst the rocker arm fork is in retracted position and, therefore, the bolt is also retracted outside the cavity of the body.

From this position, to again place the back in operating position, the back is pushed towards the boot, which causes the introduction of the slide inside the body cavity, pushing against the flexible flange and causing its retraction until the release of the interlocking between the rear pin of the flange and the retaining bolt of the body. At this time, the action of the spring causes the tilting of the rocker arm, and the transverse sliding of the bolt, which contacts against the slide until remaining opposite one of the slide orifices, wherein it will be interlocked, establishing a stable position for the back.

To change the inclination of the back, the manually actuated button should be actuated which, through the corresponding rod, acts on the rocker arm, causing the tilting of the rocker arm which also causes the extraction of the bolt from the slide orifice wherein it is found, simultaneously causing an elastic deformation of the flange of the rocker arm by pushing against the slide. When the manually actuated button is released, whilst the back moves, the rocker arm tilts in the opposite direction by action of the spring, which causes the bolt to move towards the slide, contacting against this, until a new orifice thereof remains opposite a bolt, wherein it will be interlocked, thus establishing a second interlocking position and inclination of the back.

### DESCRIPTION OF THE DRAWINGS

To complement the description being made and with the object of helping towards a better understanding of the characteristics of the invention, in accordance with a preferred example of practical embodiment thereof, a set of figures is attached as an integral part of the description, wherein the following has been represented with an illustrative non-limitative character:
- Figure 1.: Shows a perspective view of the locking mechanism in the situation wherein the body solidly joined to the back is introduced in the slide connected to the chassis without the anchoring having been established.
- Figure 2.: Shows a perspective view of the locking mechanism in the situation wherein the second interlocking position is established.
- Figure 3.: Shows a sectional perspective view of the locking mechanism in the interlocking situation.

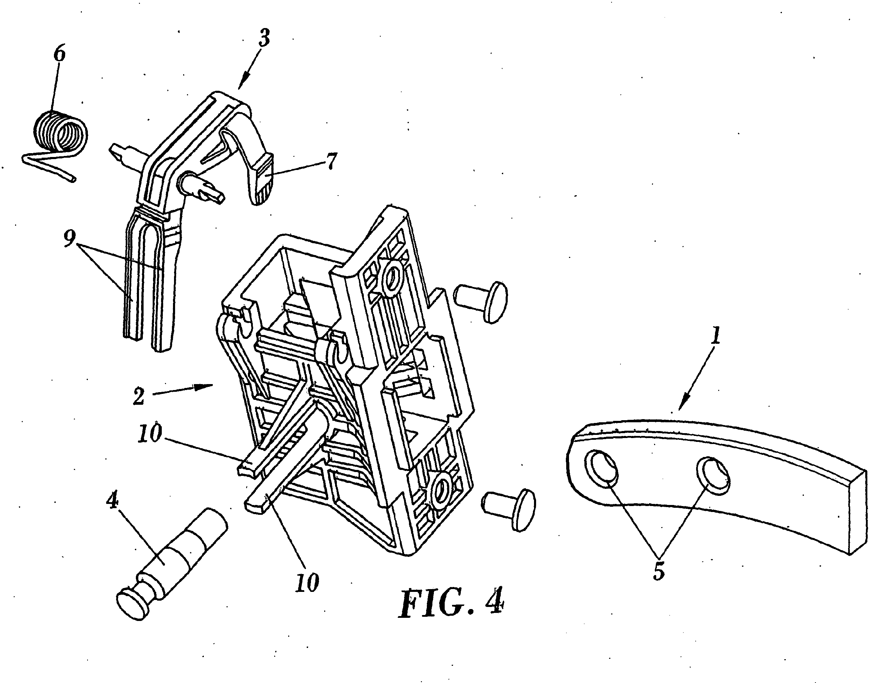

- Figure 4.: Shows an exploded view wherein the elements comprising the locking mechanism are observed.

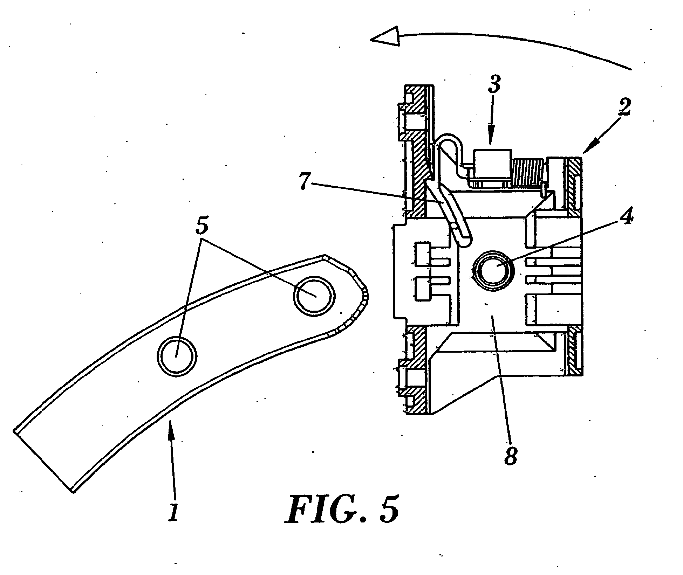

- Figure 5.: Shows a sectional side view of the locking mechanism with the body directed towards the slide in the situation wherein the back is directed towards the boot.
- Figure 6.: Shows a sectional perspective view corresponding to the phase wherein the rocker arm contacts with its flange on the slide.

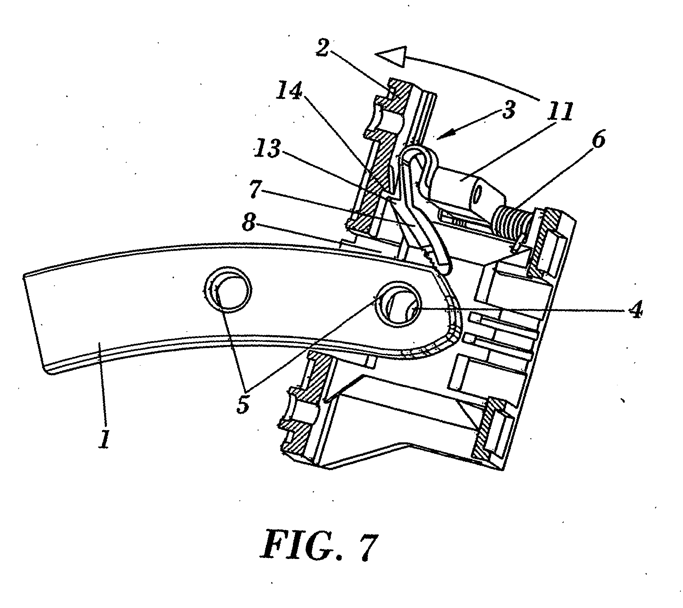

- Figure 7.: Shows a phase after that shown in the previous figure wherein the rocker arm tilts as the slide penetrates the body.

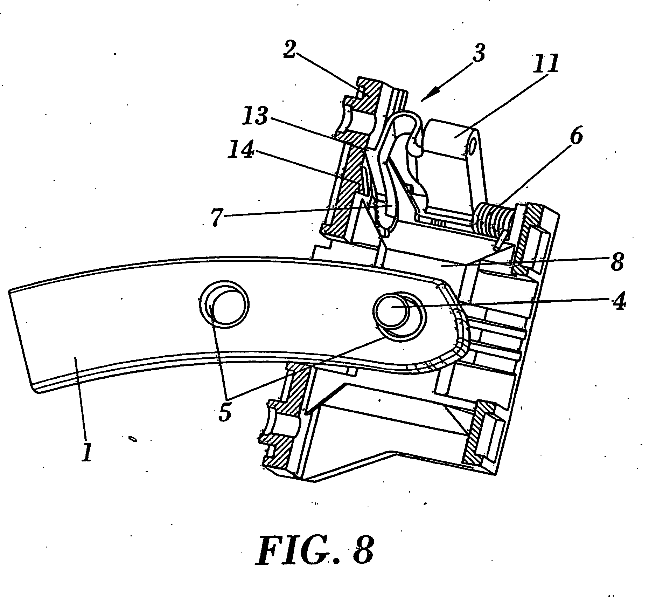

- Figure 8.: Shows a phase after that shown in the previous figure wherein the rocker arm has rotated largely determining the introduction of the bolt in the first slide orifice, establishing the first interlocking position corresponding to the first inclination of the back.

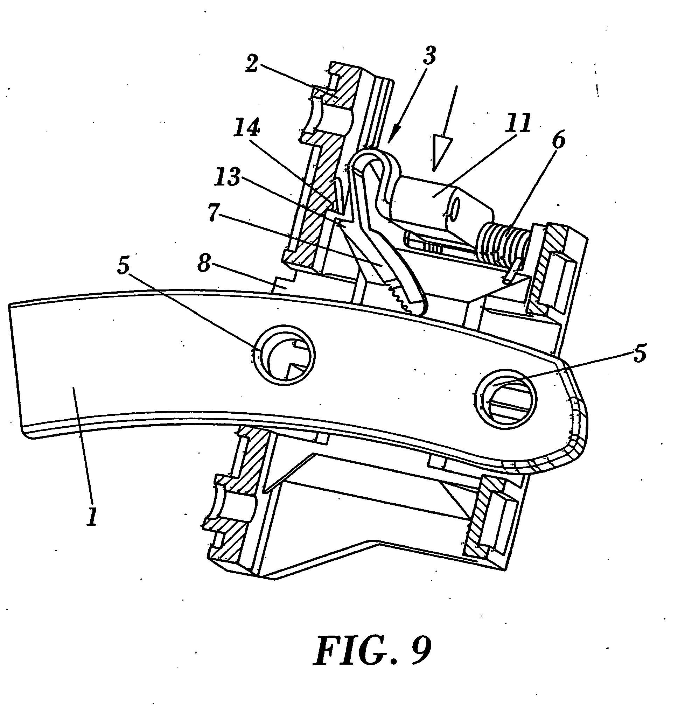

- Figure 9.: Shows a view corresponding to the phase wherein the actuating button is pressed, not represented, making the rocker arm rotate so that it releases the bolt from the slide, with the slide penetrating towards the second interlocking position.

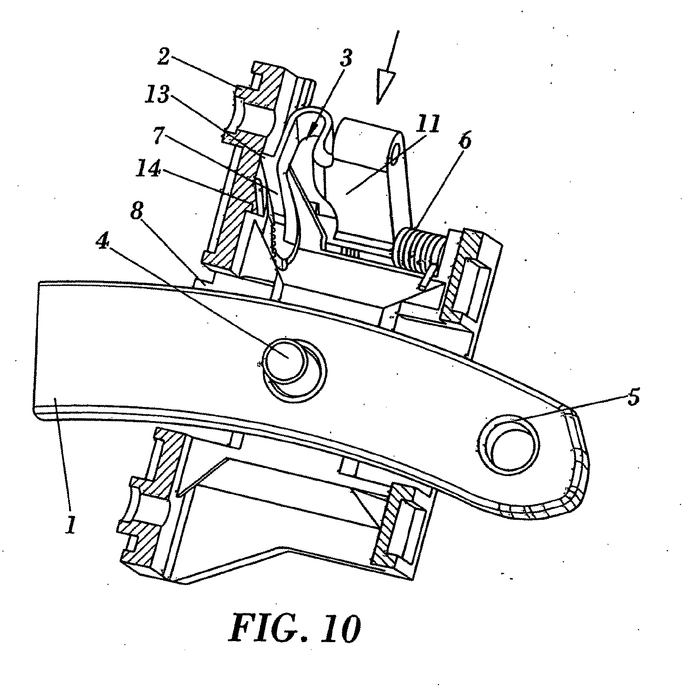

- Figure 10.: Shows a view corresponding to the phase wherein the recovery force of the spring determines the rotation of the rocker arm to interlock the bolt which penetrates in the second slide orifice establishing the second interlocking position corresponding to the other inclination of the back.

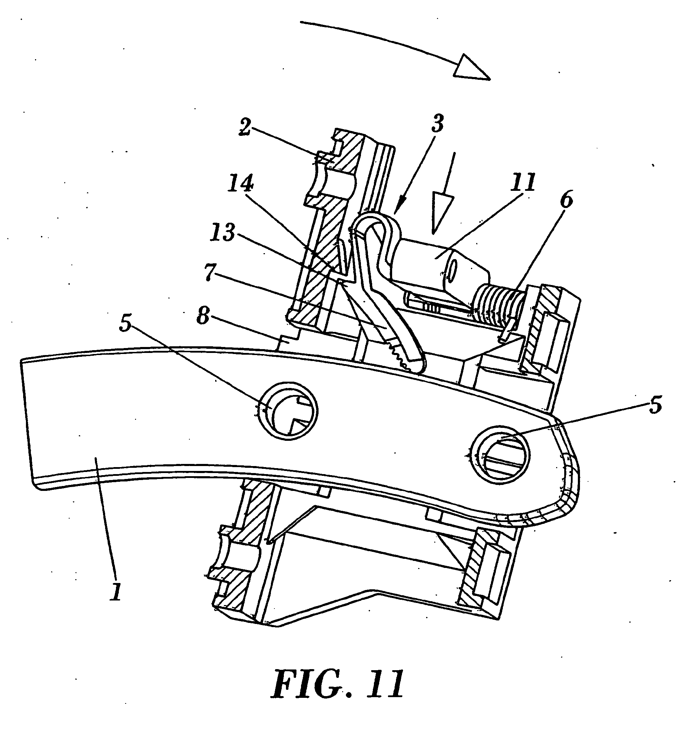

- Figure 11.: Shows a view wherein the actuating button is again pressed at the same time as the back is pushed towards the seat.

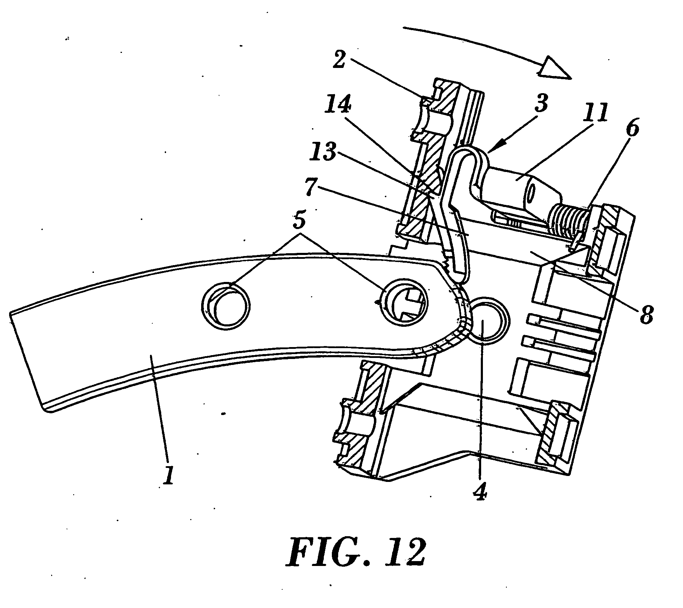

- Figure 12.: Shows a view corresponding to the exit of the body of the slide in the situation wherein the back folds towards the seat.

### PREFERRED EMBODIMENT OF THE INVENTION

The locking mechanism for the rear seat back of a vehicle which forms the object of this invention is of the type having a part (1) solidly joined to the vehicle chassis and a body (2) solidly joined to the back which incorporates means of tilting (3) actuated by a manually actuated button with intermediation of means of pushing, such as a rod, not represented and means of interlocking (4) which moves by action of the means of tilting (3) for its anchoring or disconnection of the part (1) solidly joined to the chassis, respectively allowing the fixing of the position of the back or its folding towards the seat.

Therefore, from this basic structuring the locking mechanism stands out fundamentally because the body (2), the means of tilting (3) and the means of interlocking (4) are formed in plastic material and, in particular, in polymeric material.

The body (2) is embedded in the seat back and has a cavity central wherein a slide (1) may be partially housed, solidly joined to the vehicle chassis, in the operating positions of the seat, said slide (1) having one or several orifices (5) which determine as many inclination positions of the seat back.

The means of tilting (3) consists of a rocker arm (3) which rotates around a central shaft against the recovery action of a spring (6), and the means of interlocking (4) consists of a bolt (4) which has a movement in transverse direction associated to the rotation movement of the rocker arm for its introduction in the orifices (5) of the slide (1) establishing different inclination positions of the back or its extraction from said orifices (5) to facilitate the folding of the back.

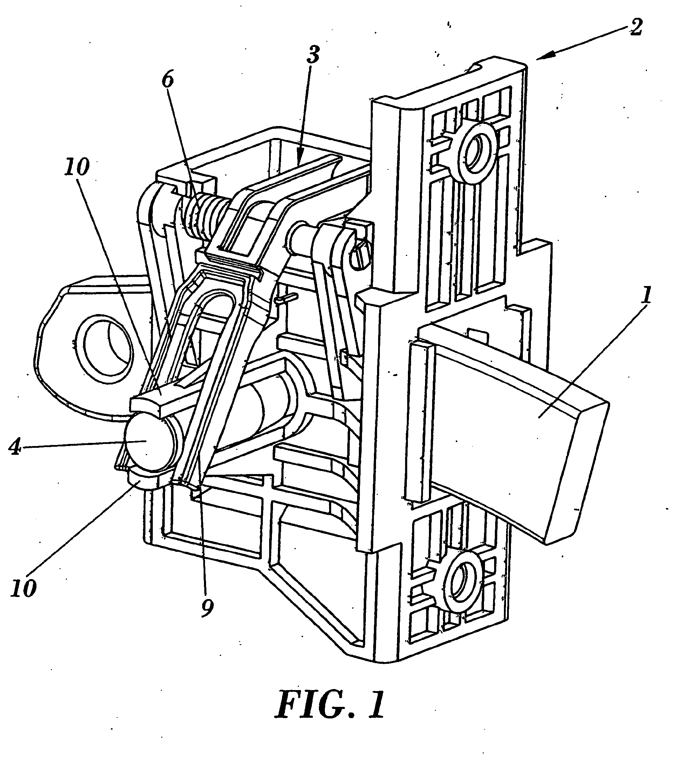

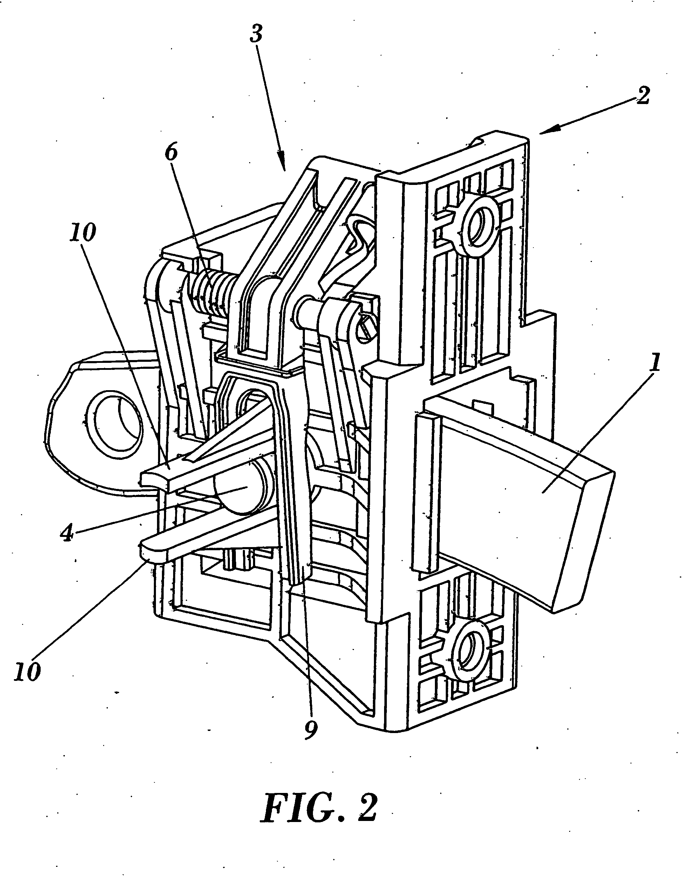

The rocker arm (3) incorporates a flexible flange (7) at one end, as well as a fork (9) at the end opposite said flexible flange (7) which grips the bolt (4), as can be seen in figures 1 and 2, which moves on guides (10) defined in the body (2) in transverse direction entering the central bore (8) wherein the slide penetrates (1).

The rocker arm may have two positions:
- When the back is in one of its operating positions, with the rocker arm (3) tilted by the action of the spring (6) and the bolt (4) housed in one of the orifices (5) of the slide, the flexible flange is in a raised position, outside the cavity (8) of the body (2).
- When the back is disconnected with respect to the slide (1), the flexible flange is in a lower position, being partially housed in the cavity (2), so that when the slide (1) is introduced in the cavity (2), it will abut against the flexible flange, causing the tilting of the rocker arm to the position described in the previous paragraph. This stable position is achieved based on the fact that the flexible flange has a rear pin (13) which can be interlocked and unlocked with respect to a retaining rib (14) provided in the body (2).

The rocker arm (3) also has an end (11) on the side of the flexible flange (7), whereon the means of pushing connected to the manual button is coupled, which abut against this on pressing the manual button making the rocker arm (3) rotate in the unlocking direction of the bolt (4) from the orifices (5) of the slide (1).

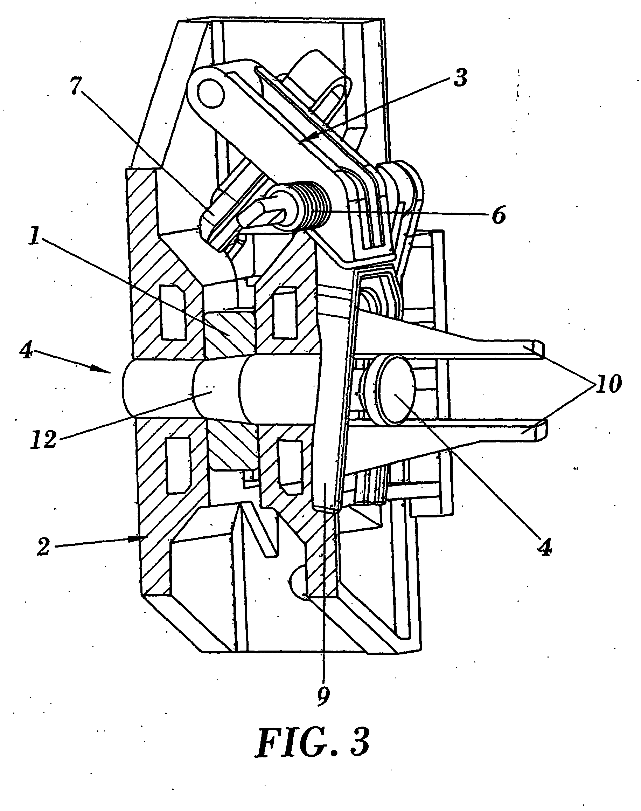

It has been provided that the bolt (4) incorporates a central conical portion (12), as observed in figure 3, which favours its fitting in the orifice (5) of the slide (1) avoiding grating or clattering during the functioning of the vehicle in the situation of anchoring of the back.

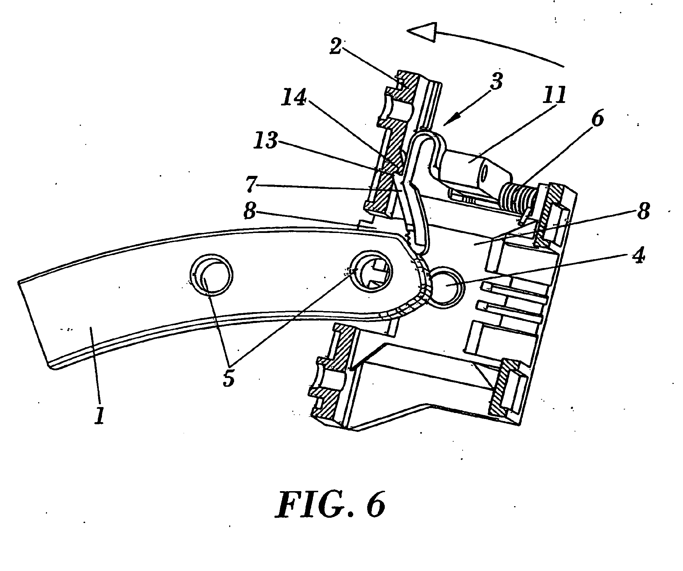

Figure 6 also shows means of fixing (13) which will connect the body to the seat back.

## Claims

1. Locking mechanism for the rear seat back of a vehicle, of the type which have a part (1) solidly joined to the vehicle chassis and a body (2) solidly joined to the back, which body (2) has a cavity (8) wherein the part (1) is housed in the operating positions of the seat, said body (2) incorporating means of tilting (3) actuated by a manually actuated button with intermediation of means of pushing, such as a rod, and means of interlocking (4), which move by action of the means of tilting (3) for their anchoring or disconnection of the part (1) solidly joined to the chassis, respectively allowing the fixing of the position of the back or its folding towards the seat, **characterized in that** the body (2), the means of tilting (3) and the means of interlocking (4) are formed in plastic material, and also **in that** the part (1) solidly joined to the chassis consists of a metal slide (1) equipped with at least one orifice (5), the means of tilting (3) consists of a rocker arm (3) which rotates around a central shaft against the recovery action of a spring (6), and the means of interlocking (4) consists of a bolt (4) which has a movement in transverse direction associated to the rotation movement of the rocker arm for its introduction in the orifices (5) of the slide (1) establishing different inclination positions of the back or its extraction from said orifices (5) to facilitate the folding of the back, and wherein
the rocker arm (3) incorporates a flexible flange (7) at one end which, during the movement of the back towards the boot, it is partially positioned in the cavity (8) defined in the body (2), abutting against the slide (1), causing the tilting of the rocker arm (3).

2. Locking mechanism for the rear seat back of a vehicle according to claim 1. **characterized in that** the end opposite said flexible flange (7) the rocker arm incorporates a fork (9) which grips the bolt (4), which moves on guides (10) defined in the body (2) in transverse direction entering the cavity (8) wherein the slide (1) penetrates.

3. Locking mechanism for the rear seat back of a vehicle according to claim 2, **characterized in that** the flexible flange comprises a rear pin (13) provided for its interlocking with respect to a retaining rib (14) of the body (2) of the locking mechanism, so that the coupling between the rear pin (13) and the retaining rib (14) maintain the rocker arm (3) tilted, against the action of the spring (6), maintaining the bolt (4) in retracted position with respect to the cavity (8).

4. Locking mechanism for the rear seat back of a vehicle according to the preceding claims, **characterized in that** the rocker arm (3) has an end (11) on the side of the flexible flange (7) whereon the means of pushing connected to the manual button is coupled, which abut against this on pressing the manual button making the rocker arm (3) rotate in the unlocking direction of the bolt (4) from the orifices (5) of the slide (1).

5. Locking mechanism for the rear seat back of a vehicle according to the preceding claims, **characterized in that** the bolt (4) incorporates a central conical portion (12) which favours its fitting in the orifice (5) of the slide (1) avoiding grating or clattering during the functioning of the vehicle in the situation of anchoring of the back.

## Patentansprüche

1. Verriegelungsmechanismus für die Rücksitz-Rückenlehne eines Fahrzeugs, des Typs, der einen fest mit der Fahrzeugkarosserie verbundenen Teil (1) und einen fest mit der Rückenlehne verbundenen Körper (2) aufweist, wobei der Körper (2) einen Hohlraum (8) aufweist, in dem der Teil (1) in den Betriebspositionen des Sitzes untergebracht ist, wobei der Körper (2) eine Kippvorrichtung (3), die durch einen manuell bedienbaren Knopf in Verbindung mit einer Schiebvorrichtung wie z.B. einer Stange betätigt wird, und eine Verriegelungsvorrichtung (4) aufweist, die durch die Aktion der Kippvorrichtung (3) zwecks Verankerung oder Freigabe des fest mit der Karosserie verbundenen Teils (1) bewegt wird, wodurch die Position der Rückenlehne fixiert wird bzw. die Rückenlehne zu den Sitz hin geklappt wird,
**dadurch gekennzeichnet, dass** der Körper (2), die Kippvorrichtung (3) und die Verriegelungsvorrichtung (4) aus Kunststoffmaterial ausgebildet sind, und ferner **dadurch**, dass der fest mit der Karosserie verbundene Teil (1) aus einem Metall-Gleitteil (1) besteht, der mit mindestens einer Öffnung (5) versehen ist, die Kippvorrichtung (3) aus einem Kipparm (3) besteht, welcher sich um eine Mittelwelle gegen die Rückstellaktion der Feder (6) dreht, und die Verriegelungsvorrichtung (4) aus einem Riegel (4) besteht, der in Verbindung mit der Drehbewegung des Kipparms eine Bewegung in Querrichtung zum Einführen des Riegels in die Öffnungen (5) des Gleitteils (1), um verschiedene Neigungspositionen der Rückenlehne einzustellen, oder zum Herausziehen des Riegels aus den Öffnungen (5) ausführt, um das Klappen der Rückenlehne zu erleichtern, und wobei der Kipparm (3) an einem Ende mit einem flexiblen Flansch (7) versehen ist, der während der Bewegung der Rückenlehne zu dem Kofferraum hin teilweise in dem in dem Körper (2) ausgebildeten Hohlraum (8) positioniert ist, wobei er gegen das Gleitteil (1) anliegt und **dadurch** das Kippen des Kipparms (3) bewirkt.

2. Verriegelungsmechanismus für die Rücksitz-Rückenlehne eines Fahrzeugs nach Anspruch 1, **dadurch gekennzeichnet, dass** der Kipparm an dem dem flexiblen Flansch (7) gegenüberliegenden Ende eine Gabel (9) aufweist, die den Riegel (4) umgreift, der sich auf in Querrichtung in dem Körper (2) ausgebildeten Führungen (10) bewegt und in den Hohlraum (8) eintritt, in den das Gleitteil (1) eindringt.

3. Verriegelungsmechanismus für die Rücksitz-Rückenlehne eines Fahrzeugs nach Anspruch 2, **dadurch gekennzeichnet, dass** der flexible Flansch mit einem hinteren Stift (13) versehen ist, der zum Verriegeln des Flansches relativ zu einer Rückhalterippe (14) des Körpers (2) des Verriegelungsmechanismus derart vorgesehen ist, dass die Kopplung zwischen dem hinteren Stift (13) und der Rückhalterippe (14) den Kipparm (3) entgegen der Wirkung der Feder (6) gekippt hält, wodurch der Riegel (4) relativ zu dem Hohlraum (8) in der zurückgezogenen Position gehalten wird.

4. Verriegelungsmechanismus für die Rücksitz-Rückenlehne eines Fahrzeugs nach einem der vorhergehenden Ansprüche, **dadurch gekennzeichnet, dass** der Kipparm (3) auf der Seite des flexiblen Flansches (7) ein Ende (11) aufweist, an das die mit dem manuell betätigbaren Knopf verbundene Drückvorrichtung gekoppelt ist, wobei beim Drücken des manuell betätigbaren Knopfes die Drückvorrichtung gegen dieses Ende drückt, wodurch der Kipparm (3) in der Entriegelungsrichtung des Riegels (4) aus den Öffnungen (5) des Gleitteils (1) heraus gedreht wird.

5. Verriegelungsmechanismus für die Rücksitz-Rückenlehne eines Fahrzeugs nach einem der vorhergehenden Ansprüche, **dadurch gekennzeichnet, dass** der Riegel (4) mit einem zentralen konischen Teil (12) versehen ist, der das Eintreten des Riegels in die Öffnung (5) des Gleitteils (1) erleichtert, wodurch bei Betrieb des Fahrzeugs in der Situation der Verankerung der Rückenlehne ein Reiben oder Klappern verhindert wird.

## Revendications

1. Mécanisme de blocage pour le dossier de siège arrière d'un véhicule, du type qui ont une partie (1) reliée solidement au châssis du véhicule et un corps (2) relié solidement au dossier, ledit corps (2) possède une cavité (8) où la partie (1) est logée dans les positions fonctionnelles du siège, ledit corps (2) incorporant un moyen de basculement (3) actionné par un bouton actionné manuellement par l'intermédiaire de moyens de poussée, comme d'une tige, et des moyens d'interverrouillage (4) qui se déplacent sous l'action des moyens de basculement (3) pour leur ancrage ou déconnection de la partie (1) reliée solidement au châssis, respectivement permettant la fixation de la position du dossier ou son pliage vers le siège, **caractérisé en ce que** le corps (2), les moyens de basculement (3) et les moyens d'interverrouillage (4) sont réalisés en matériau plastique, et également **en ce que** la partie (1) reliée solidement au châssis est constituée d'un coulisseau métallique (1) équipée d'au moins un orifice (5), le moyen de basculement (3) est constitué d'un culbuteur (3) qui tourne autour d'un arbre central contre l'action de rappel d'un ressort (6), et le moyen d'interverrouillage (4) est constitué d'un boulon (4) qui possède un mouvement dans la direction transversale associé au mouvement de rotation du culbuteur pour son introduction dans les orifices (5) du coulisseau (1) en établissant des positions d'inclinaison différentes du dossier ou son extraction desdits orifices (5) pour faciliter le pliage du dossier, et où
le culbuteur (3) incorpore une bride flexible (7) à une extrémité qui, pendant le mouvement du dossier vers le coffre, est positionnée partiellement dans la cavité (8) définie dans le corps (2), butant contre le coulisseau (1), provoquant le basculement du culbuteur (3).

2. Mécanisme de blocage pour le dossier de siège arrière d'un véhicule selon la revendication 1, **caractérisé en ce qu'**à l'extrémité opposée à ladite bride flexible (7), le culbuteur incorpore une fourche (9) qui saisit le boulon (4), qui se déplace sur des guidages (10) définis dans le corps (2) dans la direction transversale entrant dans la cavité (8) dans laquelle le coulisseau (1) pénètre.

3. Mécanisme de blocage pour le dossier de siège arrière d'un véhicule selon la revendication 2, **caractérisé en ce que** la bride flexible comprend un axe arrière (13) prévu pour son interverrouillage par rapport à une nervure de retenue (14) du corps (2) du mécanisme de verrouillage de sorte que le couplage entre l'axe arrière (13) et la nervure de retenue (14) maintient le culbuteur (3) à l'état basculé, contre l'action du ressort (6), maintenant le boulon (4) dans la position rétractée par rapport à la cavité (8).

4. Mécanisme de blocage pour le dossier de siège arrière d'un véhicule selon les revendications précédentes, **caractérisé en ce que** le culbuteur (3) présente une extrémité (11) sur le côté de la bride flexible (7) sur laquelle le moyen de poussée relié au bouton manuel est couplé, qui bute contre celle-ci lors d'un appui sur le bouton manuel amenant le culbuteur (3) à tourner dans la direction de déverrouillage du boulon (4) des orifices (5) du coulisseau (1).

5. Mécanisme de blocage pour le dossier de siège arrière d'un véhicule selon les revendications précédentes, **caractérisé en ce que** le boulon (4) incorpore une portion conique centrale (12) qui favorise son ajustement dans l'orifice (5) du coulisseau (1) en évitant un grincement ou cliquetis pendant le fonctionnement du véhicule dans la situation de l'ancrage du dossier.
